# EUROPEAN PATENT APPLICATION

(11) **EP 4 557 897 A1**
(43) Date of publication of application: **21.05.2025**
(21) Application number: 23852715.4
(22) Date of filing: 14.06.2023
(51) Int. Cl.: H05K 5/03, H05K 5/00, H04M 1/02, A45C 11/00, H04B 1/3888, A45C 13/00, H04W 4/00, A45C 13/10

(54) **CASE COMPRISING STRUCTURE THAT CAN ROTATE WITH RESPECT TO ELECTRONIC DEVICE**

(30) Priority: 12.08.2022 KR 20220101631; 25.08.2022 KR 20220107164
(71) Applicant: Samsung Electronics Co., Ltd., Suwon-si, Gyeonggi-do 16677 (KR)
(72) Inventor: LEE, Sunghoon, Suwon-si Gyeonggi-do 16677 (KR); PARK, Seonkeun, Suwon-si Gyeonggi-do 16677 (KR); CHUNG, Jaewoong, Suwon-si Gyeonggi-do 16677 (KR)
(74) Representative: Gulde & Partner
(86) International application number: PCT/KR2023/008228
(87) International publication number: WO 2024/034828

(57) **Abstract**

A case according to one embodiment comprises: a base; and a door that can rotate with respect to the base, and that can be switched to a first state of facing a side surface of an electronic device and a second state in which the side surface of the electronic device is exposed to the outside of the case, wherein the state of the door switches from the first state to the second state on the basis that the state of the electronic device switches from a slide-in state to a slide-out state, and switches from the second state to the first state on the basis that the state of the electronic device switches from the slide-out state to the slide-in state.

## Description

### [Technical Field]

The present disclosure relates to a case comprising a structure that may rotate with respect to an electronic device.

### [Background Art]

As the electronic device is carried by a user, the electronic device may be exposed to various environments. A case may protect the electronic device from exposure to various environments by being detachably coupled to the electronic device. To enable the user to be provided with various contents through the electronic device, the electronic device may include a structure in which a size of a display for displaying contents may be changed. As the structure of the electronic device is changed, the case coupled to the electronic device may include various structures corresponding to the changing structure of the electronic device.

### [Disclosure]

### [Technical Solution]

According to an embodiment, a case detachably coupled to an electronic device, the case may comprise a base. According to an embodiment, the case may comprise a door, by rotating with respect to the base, changeable to a first state facing a lateral surface of the electronic device and a second state in which the lateral surface of the electronic device is exposed to an outside of the case. According to an embodiment, the case may include wireless communication circuitry configured to provide a driving force to the door based on receiving a signal from the electronic device. According to an embodiment, the wireless communication circuitry may be configured to change a state of the door from the first state to the second state based on a state of the electronic device changing from a slide-in state of the electronic device in which a display of the electronic device has a first size to a slide-out state of the electronic device in which the display has a second size greater than the first size. According to an embodiment, the wireless communication circuitry may be configured to change the state of the door from the second state to the first state based on the state of the electronic device changing from the slide-out state to the slide-in state.

A case detachably coupled to an electronic device according to an embodiment may comprise a base. According to an embodiment, the case may comprise a door rotatable with respect to the base, changeable to a first state covering a lateral surface of the electronic device and a second state in which the lateral surface of the electronic device is exposed to an outside of the case. According to an embodiment, the case may comprise a shaft coupling the door to the base, and penetrating the door and the base. According to an embodiment, the case may comprise a pinion gear coupled to the shaft, and rotatable with respect to the base. According to an embodiment, the case may comprise a rack gear engaged with the pinion gear, movable in the base. According to an embodiment, the case may comprise a magnet coupled to the rack gear. According to an embodiment, the case may comprise an electromagnet disposed in the base. According to an embodiment, the case may comprise wireless communication circuitry configured to apply power to the electromagnet based on receiving a signal from the electronic device. According to an embodiment, the wireless communication circuitry may be configured to change a state of the door to the first state by changing a polarity of an end of the electromagnet to be different from a polarity of an end of the magnet. According to an embodiment, the wireless communication circuitry may be configured to change the state of the door to the second state by changing the polarity of the end of the electromagnet to be the same as the polarity of the end of the magnet.

### [Description of the Drawings]

FIG. 1A is a perspective view of an exemplary case according to an embodiment.
FIG. 1B illustrates a first state of an exemplary case according to an embodiment.
FIG. 1C illustrates a second state of an exemplary case according to an embodiment.
FIG. 2A illustrates an example in which an exemplary case according to an embodiment is coupled to an electronic device in a first state.
FIG. 2B illustrates an example in which an exemplary case according to an embodiment is cut along line A-A' of FIG. 2A.
FIG. 2C illustrates an example in which an exemplary case according to an embodiment is coupled to an electronic device in a second state.
FIG. 2D illustrates an example in which an exemplary case according to an embodiment is cut along line B-B' of FIG. 2C.
FIG. 3A illustrates an example in which an exemplary case according to an embodiment is coupled to an electronic device.
FIG. 3B is a cross-sectional view of an exemplary case according to an embodiment in a first state.
FIG. 3C is a cross-sectional view of an exemplary case according to an embodiment in a second state.

### [Mode for Invention]

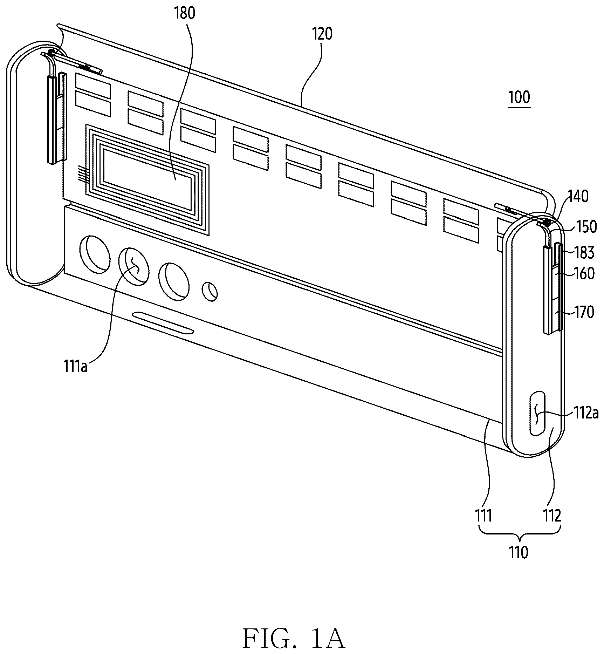

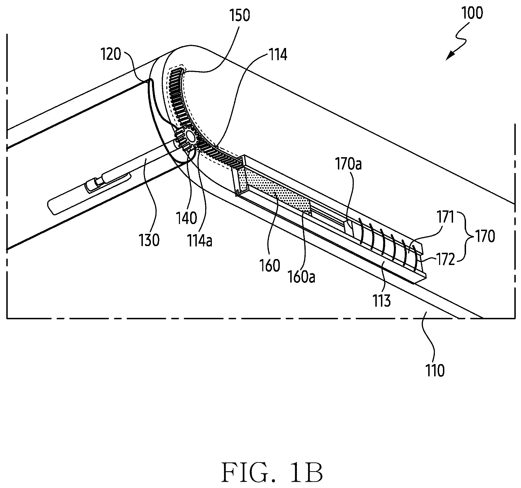

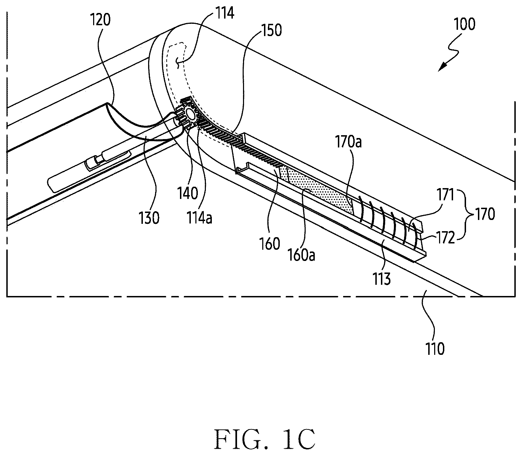

FIG. 1A is a perspective view of an exemplary case according to an embodiment, FIG. 1B illustrates a first state of an exemplary case according to an embodiment, and FIG. 1C illustrates a second state of an exemplary case according to an embodiment.

Referring to FIGS. 1A, 1B, and 1C, a case 100 according to an embodiment may include a base 110, a door 120, a shaft 130, a pinion gear 140, a rack gear 150, a magnet 160, an electromagnet 170, and/or wireless communication circuitry 180. According to an embodiment, the case 100 may be detachably coupled to an electronic device. For example, when coupled to the electronic device, the case 100 may surround at least a portion of an outer surface of the electronic device. The case 100 may protect the electronic device in the state of being coupled to the electronic device.

The base 110 may support the electronic device when coupled to the electronic device. According to an embodiment, when a case is coupled to the electronic device, the base 110 may surround the at least a portion of the outer surface of the electronic device. For example, when the case is coupled to the electronic device, the base 110 may be contacted with the outer surface of the electronic device. According to an embodiment, a size of the base 110 may correspond to a size of the electronic device. For example, the base 110 may be manufactured of a non-conductive material. For example, the base 110 may be manufactured through an injection process using a resin including the non-conductive material. However, it is not limited thereto. According to embodiments, at least a portion of the base 110 may be manufactured of a conductive material. According to an embodiment, the base 110 may provide a space in which components of the case 100 may be disposed. For example, the components of the case 100 may be supported by the base 110. According to an embodiment, the base 110 may include a supporting portion 111 and a partition wall 112.

When the case 100 is coupled to the electronic device, the supporting portion 111 may face a rear surface of the electronic device. The rear surface of the electronic device may mean the outer surface of the electronic device opposite to a front surface of the electronic device on which a display is disposed. For example, according to an embodiment, in the supporting portion 111, a size of the supporting portion 111 may correspond to a size of the rear surface of the electronic device. According to an embodiment, the supporting portion 111 may include at least one camera hole 111a. When the case 100 is coupled to the electronic device, the at least one camera hole 111a may overlap at least one camera of the electronic device. According to an embodiment, the at least one camera hole 111a may penetrate the supporting portion 111. The at least one camera of the electronic device may be exposed through the at least one camera hole 111a.

When the case 100 is coupled to the electronic device, the partition wall 112 may surround a periphery of the electronic device. For example, when the case 100 is coupled to the electronic device, the partition wall 112 may surround the periphery of the electronic device. According to an embodiment, the partition wall 112 may surround the supporting portion 111. For example, the partition wall 112 may be disposed on a periphery of the supporting portion 111. For example, the partition wall 112 may protrude from the periphery of the supporting portion 111. According to an embodiment, the partition wall 112 may include a connector hole 112b. When the case 100 is coupled to the electronic device, the connector hole 112b may face an interface hole of the electronic device. The connector hole 112b of the case 100 and the interface hole of the electronic device may accommodate connector for electrically connecting the electronic device and an external electronic device to each other. The electronic device may receive data from the external electronic device or transmit the data to the external electronic device through a connector. The electronic device may receive power from the external electronic device or transmit power to the external electronic device.

According to an embodiment, the base 110 may include a guide rail 113. The guide rail 113 may guide movement of the rack gear 150 with respect to the base 110. The guide rail 113 may guide movement of the magnet 160 with respect to the base 110. The guide rail 113 may be disposed inside the partition wall 112 of the base 110. According to an embodiment, the guide rail 113 may extend within the inside of the base 110. For example, the guide rail 113 may have a shape that extends linearly within the inside of the base 110. According to an embodiment, the guide rail 113 may surround the rack gear 150 and the magnet 160.

According to an embodiment, the base 110 may include a guide groove 114. The guide groove 114 may accommodate the rack gear 150. For example, the guide groove 114 may be disposed inside the partition wall 112 of the base 110. According to an embodiment, the guide groove 114 may surround the rack gear 150 and guide the movement of the rack gear 150. The guide groove 114 may define a movement path of the rack gear 150. According to an embodiment, the guide groove 114 may be bent within the inside of the base 110. For example, the guide groove 114 may have curvature and be bent at a periphery of the partition wall 112. According to an embodiment, a portion 114a of the guide groove 114 may be opened toward the pinion gear 140. For example, the portion 114a of the guide groove 114 may be connected to a space in which the pinion gear 140 is disposed.

The door 120 may protect a lateral surface of the electronic device in a state in which the case 100 is coupled to the electronic device. When the case 100 is coupled to the electronic device, the door 120 may face the lateral surface of the electronic device. When the case 100 is coupled to the electronic device, the door 120 may cover the lateral surface of the electronic device. According to an embodiment, the door 120 may be rotatable with respect to the base 110. For example, within the first state of the door 120, the door 120 may face the lateral surface of the electronic device coupled to the case 100. Within the first state of the door 120, the door 120 may cover the lateral surface of the electronic device coupled to the case 100. For example, within the second state of the door 120, the lateral surface of the electronic device may be exposed to the outside of the case 100. According to an embodiment, the door 120 may have a shape corresponding to the lateral surface of the electronic device. For example, at least a portion of the door 120 may have curvature and be bent.

The shaft 130 may provide a rotation center of the door 120. For example, the door 120 may be rotatable with respect to the base 110 based on the shaft 130. According to an embodiment, the shaft 130 may couple the door 120 to the base 110. For example, the shaft 130 may rotatably couple the door 120 to the base 110. According to an embodiment, the shaft 130 may penetrate through the door 120. For example, an end of the shaft 130 may be coupled to the door 120. According to an embodiment, the shaft 130 may penetrate the base 110. For example, another end of the shaft 130 opposite to the end of the shaft 130 may be disposed inside the base 110. The other end of the shaft 130 may be coupled to the pinion gear 140 within the inside of the base 110. The other end of the shaft 130 may penetrate the pinion gear 140. According to an embodiment, the shaft 130 may rotate the door 120 based on receiving a driving force from the pinion gear 140. For example, the shaft 130 may rotate together with the door 120 coupled to the shaft 130 by rotating by the pinion gear 140.

According to an embodiment, the pinion gear 140 may be rotatable within the inside of the base 110. For example, the pinion gear 140 may be disposed outside the door 120 and may be rotatable with respect to the base 110. According to an embodiment, the pinion gear 140 may be coupled to the shaft 130. For example, the pinion gear 140 may be coupled to the other end of the shaft 130 disposed inside the base 110. According to an embodiment, the pinion gear 140 may be engaged with the rack gear 150 and may rotate by the movement of the rack gear 150. For example, the pinion gear 140 may include a plurality of gear teeth disposed along a circumference of the pinion gear 140. The plurality of gear teeth may be spaced apart from each other along the circumference of the pinion gear 140. The plurality of gear teeth of the pinion gear 140 may be engaged with a gear tooth of the rack gear 150.

The rack gear 150 may be movable within the inside of the base 110. For example, the rack gear 150 may be movable within the inside of the partition wall 112 of the base 110. According to an embodiment, the rack gear 150 may move within the inside of the guide rail 113. The rack gear 150 may move within the inside of the guide groove 114. For example, an end of the rack gear 150 may be movable within the inside of the guide groove 114. For example, another end of the rack gear 150 opposite to the end of the rack gear 150 may be movable within the inside of the guide rail 113. According to an embodiment, the rack gear 150 may be engaged with the pinion gear 140. The rack gear 150 may include the plurality of gear teeth engaged with the plurality of gear teeth of the pinion gear 140. For example, the rack gear 150 may be engaged with the pinion gear 140 through the portion 114a of the guide groove 114 opened toward the pinion gear 140. In a state of being engaged with the pinion gear 140, the rack gear 150 may rotate the pinion gear 140 by moving within the inside of the base 110.

According to an embodiment, the rack gear 150 may be deformable by moving with respect to the base 110. For example, a portion of the rack gear 150 disposed inside the guide rail 113 may be parallel to a surface of the base 110. The portion of the rack gear 150 disposed inside the guide rail 113 may be parallel to a surface of the supporting portion 111. The portion of the rack gear 150 disposed inside the guide rail 113 may have a linearly extended shape. For example, another portion of the rack gear 150 disposed outside the guide rail 113 may have curvature and be bent. The other portion of the rack gear 150 disposed outside the guide rail 113 may have curvature and be bent within the inside of the guide groove 114.

According to an embodiment, the magnet 160 may be movable within the inside of the base 110. For example, the magnet 160 may be accommodated within the inside of the guide rail 113 and movable within the inside of the guide rail 113. According to an embodiment, the magnet 160 may include a material having magnetism. For example, the magnet 160 may be a permanent magnet whose polarity is not changed, but is not limited thereto. According to an embodiment, the magnet 160 may move the rack gear 150. The magnet 160 may move the rack gear 150 through an interaction with the electromagnet 170. The magnet 160 may be coupled to the rack gear 150. For example, the magnet 160 may be coupled to the end of the rack gear 150. For example, the rack gear 150 may be moved by an attractive force between the magnet 160 and the electromagnet 170. For example, the rack gear 150 may move by a repulsive force between the magnet 160 and the electromagnet.

The electromagnet 170 may be configured to generate a magnetic field based on receiving power from the electromagnet 170. For example, the electromagnet 170 may include a core 171 and a coil 172. The core 171 may have a polarity based on receiving the magnetic field applied by the coil 172. For example, the core 171 may form the magnetic field by the magnetic field applied by the coil 172. The core 171 may not have the polarity in case that the magnetic field is not received from the outside. For example, the core 171 may include a ferromagnetic material. The coil 172 may apply the magnetic field to the core 171 based on receiving power applied from the outside. For example, the coil 172 may receive power from the wireless communication circuitry 180. For example, the coil 172 may include an electric wire surrounding the core 171.

According to an embodiment, the electromagnet 170 may be disposed inside the base 110. The electromagnet 170 may be coupled to the inside of the base 110. For example, the electromagnet 170 may be coupled to the guide rail 113 within the inside of the base 110. The core 171 of the electromagnet 170 may be disposed inside the guide rail 113. The core 171 disposed inside the guide rail 113 may face the magnet 160. For example, the coil 172 of the electromagnet 170 may be disposed outside the guide rail 113. However, it is not limited thereto, and the coil 172 of the electromagnet 170 may surround the core 171 within the inside of the guide rail 113, according to an embodiment.

The wireless communication circuitry 180 may receive a signal from the outside of the case 100. For example, when the case 100 is coupled to the electronic device, the wireless communication circuitry 180 may receive the signal from the electronic device. According to an embodiment, the wireless communication circuitry 180 may be configured to apply power to the electromagnet 170 based on receiving the signal from the electronic device. For example, the wireless communication circuitry 180 may apply an electric current to the coil 172 of the electromagnet 170 based on receiving power from the electronic device. According to an embodiment, the wireless communication circuitry 180 may include a loop antenna including a coil. For example, the wireless communication circuitry 180 may include a near field communication (NFC) antenna. The loop antenna may receive the magnetic field applied from the electronic device. The magnetic field received through the loop antenna may obtain power in the coil of the loop antenna through electromagnetic induction phenomenon within the loop antenna. The wireless communication circuitry 180 may apply the obtained power to the electromagnet 170.

According to an embodiment, the wireless communication circuitry 180 may be disposed inside the base 110. For example, the wireless communication circuitry 180 may be disposed inside the supporting portion 111 of the base 110. However, it is not limited thereto. According to embodiments, the wireless communication circuitry 180 may be exposed to the outside of the base 110. According to an embodiment, the wireless communication circuitry 180 may be electrically connected to the electromagnet 170. For example, the wireless communication circuitry 180 may be electrically connected to the electromagnet 170 in a state of being separated from the electromagnet 170. For example, the wireless communication circuitry 180 may be electrically connected to the coil 172 of the electromagnet 170.

According to an embodiment, the wireless communication circuitry 180 may be configured to change a polarity of an end 170a of the electromagnet 170 based on receiving power from the electronic device. The end 170a of the electromagnet may face an end 160a of the magnet 160. Another end 160b of the magnet 160 opposite to the end 160a of the magnet 160 may be coupled to the rack gear 150. According to an embodiment, the wireless communication circuitry 180 may change the polarity of the end 170a of the electromagnet 170 identically to a polarity of the end 160a of the magnet 160. For example, when the polarity of the end 170a of the electromagnet 170 and the polarity of the end 160a of the magnet 160 are the same, all of the polarity of the end 170a of the electromagnet 170 and the polarity of the end 160a of the magnet 160 may be the same as an N pole or an S pole. The wireless communication circuitry 180 may be configured to change a state of the door 120 to the first state by changing the polarity of the end 170a of the electromagnet 170 to the same as the polarity of the end 160a of the magnet 160. For example, when the polarities of the end 170a of the electromagnet 170 and the end 160a of the magnet 160 is the same, the repulsive force may be generated between the electromagnet 170 and the magnet 160. By the repulsive force between the electromagnet 170 and the magnet 160, the magnet 160 may move in a direction away from the electromagnet 170. As the magnet 160 moves, the rack gear 150 coupled to the magnet 160 may move in the direction away from the electromagnet 170. As the rack gear 150 moves in a direction away from the electromagnet 170, the pinion gear 140 engaged with the rack gear 150 may rotate with respect to the base 110. By rotation of the pinion gear 140, the shaft 130 coupled to the pinion gear 140 may rotate. By rotation of the shaft 130, the state of the door 120 may be changed to the first state by rotating the door 120 with respect to the base 110. For example, when the polarity of the end 170a of the electromagnet 170 and the polarity of the end 160a of the magnet 160 are the same, the state of the door 120 may be changed from the second state to the first state by the rotation of the pinion gear 140.

According to an embodiment, the wireless communication circuitry 180 may change the polarity of the end 170a of the electromagnet 170 to be different from the polarity of the end 160a of the magnet 160. For example, when the polarity of the end 170a of the electromagnet 170 and the polarity of the end 160a of the magnet 160 are different from each other, the polarity of the end 170a of the electromagnet 170 may be one of the N pole and the S pole, and the polarity of the end 160a of the magnet 160 may be another one of the N pole and the S pole. According to an embodiment, the wireless communication circuitry 180 may be configured to change the state of the door 120 to the second state by differently changing the polarity of the end 170a of the electromagnet 170 and the polarity of the end 160a of the magnet 160. For example, when the polarities of the end 170a of the electromagnet 170 and the end 160a of the magnet 160 are different from each other, the attractive force may occur between the electromagnet 170 and the magnet 160. By the attractive force between the electromagnet 170 and the magnet 160, the magnet 160 may move in a direction closer to the electromagnet 170. As the magnet 160 moves, the rack gear 150 coupled to the magnet 160 may move in the direction closer to the electromagnet 170. As the rack gear 150 moves in the direction closer to the electromagnet 170, the pinion gear 140 engaged with the rack gear 150 may rotate with respect to the base 110. By the rotation of the pinion gear 140, the shaft 130 coupled to the pinion gear 140 may rotate. By the rotation of the shaft 130, the state of the door 120 may be changed to the second state by rotating the door 120 with respect to the base 110. For example, when the polarity of the end 170a of the electromagnet 170 and the polarity of the end 160a of the magnet 160 are different, the state of the door 120 may change from the first state to the second state by the rotation of the pinion gear 140.

As described above, since the state of the door 120 is changed by the wireless communication circuitry 180 without a manual operation of a user, the case 100 according to an embodiment may provide convenience to the user.

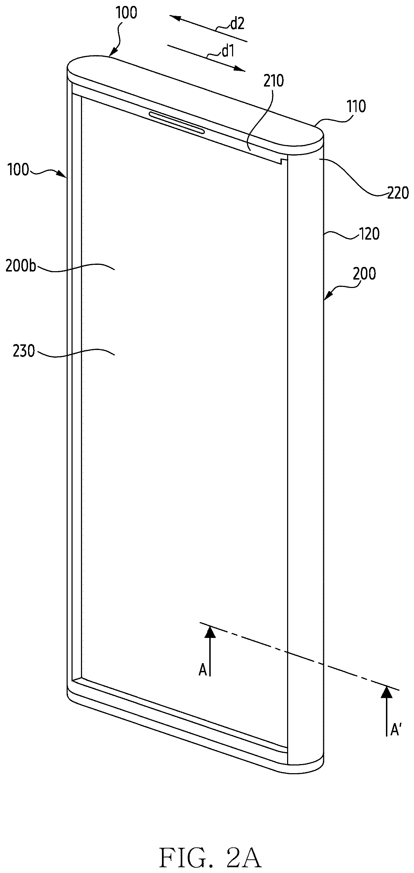

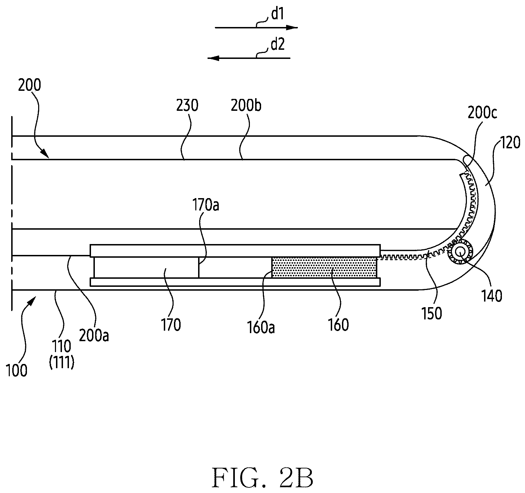

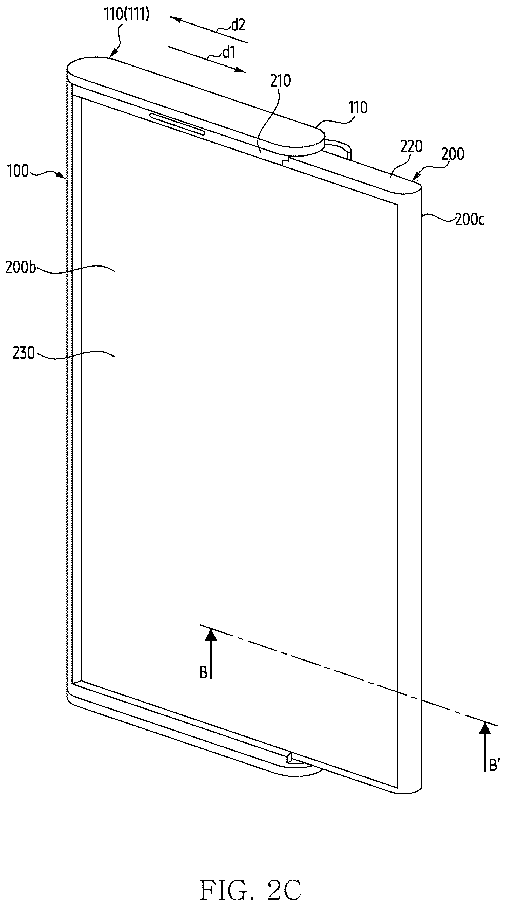

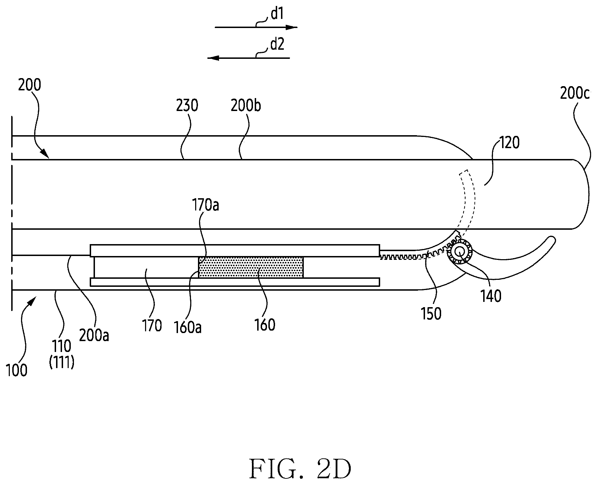

FIG. 2A illustrates an example in which an exemplary case according to an embodiment is coupled to an electronic device in a first state, FIG. 2B illustrates an example in which an exemplary case according to an embodiment is cut along A-A' of FIG. 2A, FIG. 2C illustrates an example in which an exemplary case according to an embodiment is coupled to the electronic device in a second state, and FIG. 2D illustrates an example in which an exemplary case according to an embodiment is cut along B-B' of FIG. 2C.

Referring to FIGS. 2A, 2B, 2C, and 2D, according to an embodiment, an electronic device 200 may include a first housing 210, a second housing 220, and/or a display 230. According to an embodiment, the electronic device 200 may be referred to as a rollable electronic device in terms of that a portion of the display 230 is rolled inside the first housing 210. The electronic device 200 may be referred to as a slidable electronic device in terms of that the portion of the display 230 is slidable with respect to the first housing 210.

The first housing 210 may define a portion of an outer surface of the electronic device 200. The first housing 210 may define a space in which components of the electronic device 200 may be disposed. The first housing 210 may support various components of the electronic device 200. According to an embodiment, the first housing 210 may define a rear surface 200a of the electronic device 200. The rear surface 200a of the electronic device 200 may be opposite to a front surface 200b of the electronic device 200 on which the display 230 is disposed. For example, a direction toward which the rear surface 200a of the electronic device 200 faces may be opposite to a direction toward which the front surface 200b of the electronic device 200 faces. According to an embodiment, when a case 100 is coupled to the electronic device 200, the rear surface 200a of the electronic device 200 may face a surface of a supporting portion 111 of a base 110.

The second housing 220 may define another portion of the outer surface of the electronic device 200. According to an embodiment, the second housing 220 may be movable with respect to the first housing 210. For example, the second housing 220 may slide inside the first housing 210 or outside the first housing 210. For example, the second housing 220 may be linearly movable with respect to the first housing 210. For example, the second housing 220 may be inserted into the inside of the first housing 210 or may be extracted from the first housing 210. According to an embodiment, the second housing 220 may support a component of the electronic device 200. For example, the second housing 220 may support the display 230.

The display 230 may be configured to provide visual information. According to an embodiment, the display 230 may be disposed on a surface of the second housing 220. The display 230 may move with respect to the first housing 210 together with the second housing 220. According to an embodiment, the display 230 may be extracted to the outside of the first housing 210 by movement of the second housing 220 with respect to the first housing 210. For example, as the second housing 220 moves in a first direction d1 with respect to the first housing 210, the display 230 may slide from the inside of the first housing 210 to the outside of the first housing 210. As the second housing 220 moves in the first direction d1, a size of a display region of the display 230 that is visible from the outside of the electronic device 200 may increase. For example, as the second housing 220 moves in a second direction d2 opposite to the first direction d1 with respect to the first housing 210, the display 230 may slide from the outside of the first housing 210 to the inside of the first housing 210. As the second housing 220 moves in the second direction d2, the size of the display region of the display 230 that is visible from the outside of the electronic device 200 may decrease.

According to an embodiment, by the movement of the second housing 220, a state of the electronic device 200 may be changed. For example, the state of the electronic device 200 may include a slide-in state and/or a slide-out state. Within the slide-in state of the electronic device 200, the second housing 220 may be movable only in the first direction d1 of the first direction d1 and the second direction d2. Within the slide-in state of the electronic device 200, the second housing 220 may not be movable in the second direction d2. Within the slide-in state of the electronic device 200, the display 230 may have a first size. A size of the display 230 may mean an area of the display 230 that is visible from the outside of the electronic device 200. The slide-in state of the electronic device 200 may be referred to as, for example, a reduced state. Within the slide-out state of the electronic device 200, the second housing 220 may be movable only in the second direction d2 of the first direction d1 and the second direction d2. Within the slide-out state of the electronic device 200, the second housing 220 may not be movable in the first direction d1. Within the slide-out state of the electronic device 200, the size of the display 230 may have a second size larger than the first size. The slide-out state of the electronic device 200 may be referred to as, for example, an extended state.

According to an embodiment, the movement of the second housing 220 with respect to the first housing 210 may be performed based on an external force transmitted from a user or a driving force by a driving module (not illustrated) disposed inside the first housing 210 or the second housing 220. For example, an operation of the driving module may be triggered based on an input of the user. According to an embodiment, the user input for triggering the operation of the driving module may include a touch input, a force touch input, and/or a gesture input through the display 230. According to an embodiment, the user input for triggering the operation of the driving module may include an audio input (a voice input) or an input of a physical button exposed to the outside of the first housing 210 or the second housing 220. According to an embodiment, the operation of the driving module may be triggered in response to detecting an input by the external force of the user.

According to an embodiment, within the slide-in state of the electronic device 200, a state of a door 120 may be the first state. Within the first state of the door 120, the door 120 may face a lateral surface 200c of the electronic device 200. The lateral surface 200c of the electronic device 200 may mean, for example, a surface of the electronic device 200 facing the first direction d1. The lateral surface 200c of the electronic device 200 may be disposed between the rear surface 200a of the electronic device 200 and the front surface 200b of the electronic device 200. The lateral surface 200c of the electronic device 200 may connect the rear surface 200a of the electronic device 200 and the front surface 200b of the electronic device 200. According to an embodiment, the lateral surface 200c of the electronic device 200 may have curvature and may be bent. However, it is not limited thereto, and the lateral surface 200c of the electronic device 200 may be perpendicular to the rear surface 200a and/or the front surface 200b of the electronic device 200.

According to an embodiment, the state of the door 120 may be changed based on an input to change the state of the electronic device 200. For example, the electronic device 200 may change the state of the door 120 through wireless communication circuitry (e.g., the wireless communication circuitry 180 of FIG. 1A) based on receiving a user input to change the state of the electronic device 200.

According to an embodiment, the wireless communication circuitry 180 may change the state of the door 120 from the first state to the second state, based on the state of the electronic device 200 changing from the slide-in state to the slide-out state. For example, the wireless communication circuitry 180 may change the state of the door 120 from the first state to the second state before the state of the electronic device 200 changes from the slide-in state to the slide-out state. For example, the wireless communication circuitry 180 may change the state of the door 120 from the first state to the second state while the state of the electronic device 200 changes from the slide-in state to the slide-out state. For example, the electronic device 200 may identify a first user input for driving the second housing 220 in the first direction d1 within the slide-in state of the electronic device 200. The electronic device 200 may transmit a first signal to the wireless communication circuitry 180 based on identifying the first user input. The wireless communication circuitry 180 may change a polarity of an end 170a of an electromagnet 170 to be different from a polarity of an end 160a of a magnet 160 based on receiving the first signal from the electronic device 200. As the polarity of the end 170a of the electromagnet 170 is changed to be different from the polarity of the end 160a of the magnet 160, the state of the door 120 may be changed from the first state to the second state by movement of the rack gear 150. As the state of the door 120 is changed to the second state, the lateral surface 200c of the electronic device 200 may be exposed to the outside of the case 100. According to an embodiment, after the state of the door 120 is changed to the second state, the electronic device 200 may move the second housing 220 in the first direction d1. As the second housing 220 moves in the first direction, the state of the electronic device 200 may change from the slide-in state to the slide-out state. However, it is not limited thereto. For example, the electronic device 200 may move the second housing 220 while the door 120 rotates.

According to an embodiment, within the second state of the door 120, the door 120 may be spaced apart from the rear surface 200a connected to the lateral surface 200c of the electronic device 200. For example, in case that the door 120 contacts the rear surface 200a of the electronic device 200 within the second state of the door 120, the rear surface 200a of the electronic device 200 may be damaged as the movement of the second housing 220 is repeated. Since the door 120 is spaced apart from the rear surface 200a of the electronic device 200 within the second state of the door 120, the case 100 according to an embodiment may provide a structure capable of preventing damage to the electronic device 200.

According to an embodiment, the wireless communication circuitry 180 may change the state of the door 120 from the second state to the first state based on the state of the electronic device 200 changing from the slide-out state to the slide-in state. For example, the wireless communication circuitry 180 may change the state of the door 120 from the second state to the first state after the state of the electronic device 200 changes from the slide-out state to the slide-in state. For example, the wireless communication circuitry 180 may change the state of the door 120 from the second state to the first state while the state of the electronic device 200 changes from the slide-out state to the slide-in state. For example, the electronic device 200 may identify a second user input for driving the second housing 220 in the second direction d2 within the slide-out state of the electronic device 200. The electronic device 200 may move the second housing 220 in the second direction d2 based on identifying a user input for driving the second housing 220 in the second direction d2. As the second housing 220 moves in the second direction d2, the state of the electronic device 200 may change from the slide-out state to the slide-in state. After the state change of the electronic device 200 is completed, the electronic device 200 may transmit a second signal for changing the state of the door 120 from the second state to the first state to the wireless communication circuitry 180. The wireless communication circuitry 180 may change the polarity of the end 170a of the electromagnet 170 to be the same as the polarity of the end 160a of the magnet 160 based on receiving the second signal from the electronic device 200. As the polarity of the end 170a of the electromagnet 170 is changed to be the same as the polarity of the end 160a of the magnet 160, the state of the door 120 may be changed from the second state to the first state by the movement of the rack gear 150. As the state of the door 120 is changed to the first state, the lateral surface 200c of the electronic device 200 may face the door 120. Within the first state of the door 120, the lateral surface 200c of the electronic device 200 may be covered by the door 120.

Meanwhile, in the above description, it is described that the change in the state of the door 120 begins, after the movement of the second housing 220 for changing the state of the electronic device 200 from the slide-out state to the slide-in state is completed, however, it is not limited thereto. For example, the change in the state of the door 120 may be initiated while the second housing 220 is moving.

According to an embodiment, the electronic device 200 may identify an obstacle inside or outside the case 100 based on identifying whether the change in the state of the electronic device 200 is completed. For example, the electronic device 200 may identify the obstacle inside or outside the case 100 based on identifying whether the movement of the second housing 220 with respect to the first housing 210 is completed. The electronic device 200 may identify whether the change in the state of the electronic device 200 is completed by identifying a moving distance of the second housing 220 with respect to the first housing 210. For example, in case that the moving distance of the second housing 220 with respect to the first housing 210 is less than a preset distance, the electronic device 200 may identify that the change in the state of the electronic device 200 is not completed. For example, in case that the moving distance of the second housing 220 with respect to the first housing 210 is longer than or equal to the preset distance, the electronic device 200 may identify that the change in the state of the electronic device 200 is completed. For example, the obstacle disposed outside the case 100 and/or inside the case 100 may interfere with rotation of the door 120. In case that the state of the door 120 is not change from the first state to the second state as the rotation of the door 120 is interfered, the second housing 220 may not move in the first direction d1. In case that the second housing 220 may not move in the first direction d1, the change in the state of the electronic device 200 may not be completed. The electronic device 200 according to an embodiment may provide a method for identifying the obstacle inside or outside the case 100 based on whether the change in the state of the electronic device 200 is completed. The electronic device 200 may provide a notification to the user based on identifying the obstacle inside or outside the case 100. For example, the electronic device 200 may provide the notification that the movement of the second housing 220 is not possible through the display 230 based on identifying the obstacle inside or outside the case 100. For example, the electronic device 200 may provide the notification to remove the obstacle inside or outside the case 100 through the display 230 based on identifying the obstacle inside or outside the case 100.

As described above, the case 100 according to an embodiment may provide convenience to the user, since the state of the door 120 is changed through the user input for changing the state of the electronic device 200 without a separate user input for changing the state of the door 120.

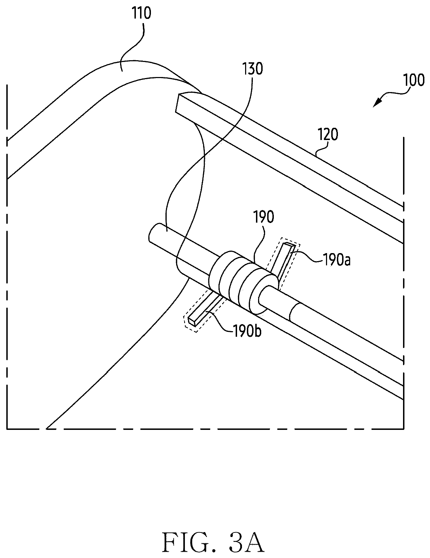

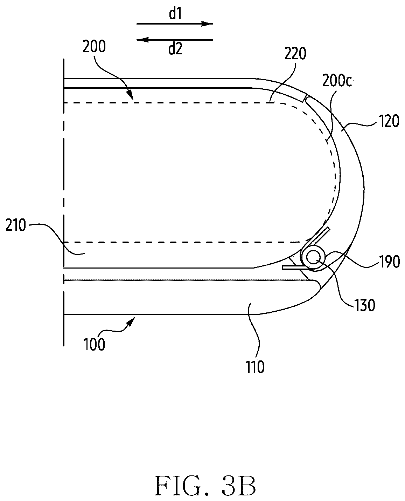

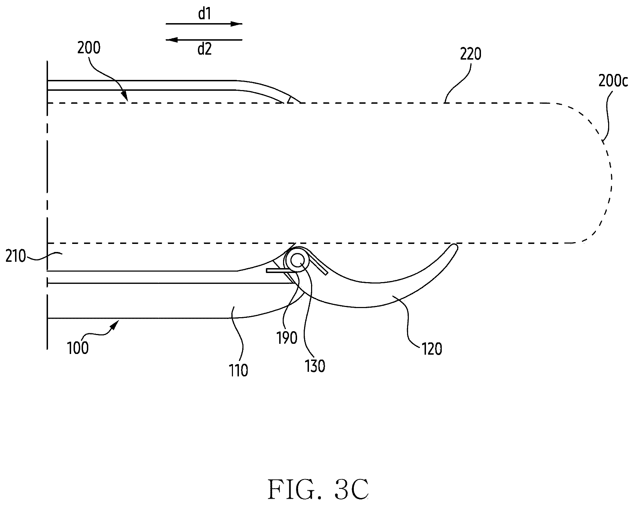

FIG. 3A illustrates an example in which an exemplary case according to an embodiment is coupled to an electronic device, FIG. 3B is a cross-sectional view of an exemplary case according to an embodiment when the exemplary case is in a first state, and FIG. 3C is a cross-sectional view of an exemplary case according to an embodiment when the case is in a second state.

Referring to FIGS. 3A, 3B, and 3C, a case 100 according to an embodiment may include an elastic member 190. The elastic member 190 may provide an elastic force to a door 120. For example, the elastic member 190 may be referred to as a torsion spring, but it is not limited thereto. According to an embodiment, the elastic member 190 may be coupled to a shaft 130. For example, the elastic member 190 may surround the shaft 130. According to an embodiment, the elastic member 190 may be coupled to a base 110 and the door 120. For example, a portion 190a of the elastic member 190 may be in contact with the door 120. Another portion 190b of the elastic member 190 may contact the base 110.

According to an embodiment, the elastic member 190 may change a state of the door 120, by being deformed by an external force. For example, the elastic member 190 may be deformed by a physical force transmitted from a second housing 220. For example, within a slide-in state of an electronic device 200, the state of the door 120 may be the first state. When the state of the door 120 is the first state, the second housing 220 of the electronic device 200 may move in a first direction d1 with respect to a first housing 210. By movement of the second housing 220 with respect to the first housing 210, the door 120 may rotate. While a state of the electronic device 200 is changed from the slide-in state to a slide-out state by the movement of the second housing 220 with respect to the first housing 210, the elastic member 190 may be twisted by rotation of the door 120. While the state of the electronic device 200 is maintained in the slide-out state, the state of the door 120 may be maintained in the second state. For example, the state of the door 120 may be maintained in the second state as a portion of the door 120 contacts a surface of the second housing 220. In order to change the state of the electronic device 200 from a slide-out state to the slide-in state, the second housing 220 may move in a second direction d2 with respect to the first housing 210. When the second housing 220 moves in the second direction d2, the door 120 may rotate by a restoring force of the elastic member 190. As the second housing 220 moves in the second direction d2, the door 120 may be rotated by the elastic member 190 and face a lateral surface 200c of the electronic device 200.

For example, the elastic member 190 may be deformed by a physical force transmitted from a user. Before the state of the electronic device 200 is changed from the slide-in state to the slide-out state, the state of the door 120 may be changed from the first state to the second state by the physical force transmitted from the user. As the state of the door 120 is changed from the first state to the second state, the elastic member 190 may be deformed. When the second housing 220 moves in the second direction d2 for changing the state of the electronic device 200 from the slide-out state to the slide-in state, the door 120 may rotate by the restoring force of the elastic member 190. As the state of the door 120 is changed from the second state to the first state by the rotation of the door 120, the door 120 may face the lateral surface 200c of the electronic device 200.

The electronic device may include a structure in which a housing of the electronic device is movable with respect to another housing in order to expand or reduce a size of a display. As the housing moves, the case coupled to the electronic device may include a structure in which a portion of the case is movable. When the user should operate movement of the portion of the case whenever the display is expanded or reduced, the user may feel uncomfortable. The case may require a structure in which an operation for moving the portion of the case is linked to an operation for moving the housing of the electronic device.

According to an embodiment, a case (e.g., the case 100 of FIG. 1A, FIG. 1B, and FIG. 1C) detachably coupled to an electronic device (e.g., the electronic device 200 of FIG. 2A, FIG. 2B, FIG. 2C, and FIG. 2D) may comprise a base (e.g., the base 110 of FIG. 1A, FIG. 1B, and FIG. 1C). According to an embodiment, the case may comprise a door (e.g., the door 120 of FIG. 1A, FIG. 1B, and FIG. 1C), by rotating with respect to the base, changeable to a first state facing a lateral surface (e.g., the lateral surface 200c of FIG. 2A, FIG. 2B, FIG. 2C, and FIG. 2D) of the electronic device and a second state in which the lateral surface of the electronic device is opened to an outside of the case. According to an embodiment, a state of the door may be changed from the first state to the second state based on a state of the electronic device changing from a slide-in state in which a display (e.g., the display 230 of FIG. 2A and FIG. 2C) of the electronic device has a first size to a slide-out state in which the display has a second size greater than the first size. According to an embodiment, the state of the door may be changed from the second state to the first state based on the state of the electronic device changing from the slide-out state to the slide-in state.

Since the state of the door is changed through a user input for changing the state of the electronic device without a separate user input for changing the state of the door, the case according to an embodiment may provide convenience to a user.

According to an embodiment, the state of the electronic device may be changed as a portion (e.g., the second housing 220 of FIG. 2A, FIG. 2B, FIG. 2C, and FIG. 2D) of the electronic device slides with respect to another portion (e.g., the first housing 210 of FIG. 2A, FIG. 2B, FIG. 2C, and FIG. 2D) of the electronic device. According to an embodiment, the door may surround the lateral surface of the electronic device disposed on the portion of the electronic device in the first state.

Since the case according to an embodiment covers the lateral surface of the electronic device in the first state, the electronic device may be protected from an impact applied from the outside of the electronic device.

According to an embodiment, the case may further comprise a shaft (e.g., the shaft 130 of FIG. 1A, FIG. 1B, and FIG. 1C) coupling the door to the base by penetrating the door and the base.

The case according to an embodiment may provide a structure in which the door is rotatable with respect to the base through the shaft.

According to an embodiment, the door may have curvature and be bent.

The case according to an embodiment may provide a structure capable of protecting the electronic device by the door having a shape corresponding to a shape of the electronic device.

According to an embodiment, the door may be spaced apart from a rear surface (e.g., the rear surface 200a of FIG. 2A, FIG. 2B, FIG. 2C, and FIG. 2D) of the electronic device connected to the lateral surface of the electronic device in the second state.

The case according to an embodiment may provide a structure capable of preventing damage to the electronic device by the door spaced apart from the rear surface of the electronic device within the second state of the door.

According to an embodiment, the base may include a supporting portion (e.g., the supporting portion 111 of FIG. 1A, FIG. 1B, and FIG. 1C) in contact with the rear surface of the electronic device when the electronic device and the case are coupled. According to an embodiment, the base may include a partition wall (e.g., the partition wall 112 of FIG. 1A, FIG. 1B, and FIG. 1C) covering a periphery of the electronic device when the electronic device and the case are coupled.

The case according to an embodiment may provide a structure capable of protecting the electronic device by the supporting portion and the partition wall.

The wireless communication circuitry may be accommodated within the inside of the supporting portion.

The case according to an embodiment may provide a structure in which a change in the state of a door is linked to a change in the state of an electronic device by the wireless communication circuitry.

According to an embodiment, the partition wall may include a connector hole (e.g., the connector hole 112a of FIG. 1A) penetrating a surface of the partition wall.

The case according to an embodiment may provide a structure in which communication between the electronic device and an external electronic device is possible in a state in which the electronic device and the case are coupled through the connector hole included in the partition wall.

According to an embodiment, the supporting portion may include at least one camera hole (e.g., the camera hole 111a of FIG. 1A) penetrating the supporting portion.

The case according to an embodiment may provide a structure in which the electronic device may obtain an image in the state in which the electronic device and the case are coupled through the at least one camera hole.

According to an embodiment, the case may comprise a pinion gear (e.g., the pinion gear 140 of FIG. 1A, FIG. 1B, and FIG. 1C), coupled to the door, rotatable with respect to the base. According to an embodiment, the case may comprise a rack gear (e.g., the rack gear 150 of FIG. 1A, FIG 1B, and FIG. 1C), engaged with the pinion gear, rotating the pinion gear by moving within the inside of the base. According to an embodiment, the case may comprise a magnet (e.g., the magnet 160 of FIG. 1A, FIG. 1B, and FIG. 1C) coupled to the rack gear. According to an embodiment, the case may comprise an electromagnet (e.g., the electromagnet 170 of FIG. 1A, FIG. 1B, and FIG. 1C) electrically connected to the wireless communication circuitry and disposed in the base. According to an embodiment, the case may comprise the wireless communication circuitry (e.g., the wireless communication circuitry 180 of FIG. 1A, FIG. 1B, and FIG. 1C) electrically connected to the electromagnet, configured to provide a driving force to the door based on receiving a signal from the electronic device. According to an embodiment, the wireless communication circuitry may be configured to change the state of the door to the first state by changing a polarity of an end (e.g., the end 170a of FIG. 1B and FIG. 1C) of the electromagnet to be different from a polarity of an end (e.g., the end 160a of FIG. 1B and FIG. 1C) of the magnet. According to an embodiment, the wireless communication circuitry may be configured to change the state of the door to the second state by changing the polarity of the end of the electromagnet to be the same as the polarity of the end of the magnet.

Since the state of the door is changed through the user input for changing the state of the electronic device without the separate user input for changing the state of the door, the case according to an embodiment may provide convenience to the user.

According to an embodiment, at least a portion of the rack gear may be deformable while moving with respect to the base.

The case according to an embodiment may provide a structure capable of preventing a size of the case from being excessively increased in order to secure a moving space of the rack gear by the deformable rack gear.

According to an embodiment, the rack gear may move in a direction facing away from the electromagnet when the polarity of the end of the electromagnet and the polarity of the magnet are same each other. According to an embodiment, the rack gear may move in a direction approaching the electromagnet when the polarity of the end of the electromagnet and the polarity of the magnet are different from each other.

The case according to an embodiment may provide a structure in which the door may rotate by an interaction between the electromagnet and the magnet.

According to an embodiment, the electromagnet may include a core (e.g., the core 171 of FIG. 1B and FIG. 1C). According to an embodiment, the electromagnet may include a coil (e.g., the coil 172 of FIG. 1B and FIG. 1C) configured to wind the core and apply a magnetic field to the core based on power received from the wireless communication circuitry.

The case according to an embodiment may provide a structure capable of opening or closing the door through the interaction between the magnet and the electromagnet.

According to an embodiment, the magnet may be coupled to an end of the rack gear facing the electromagnet.

The case according to an embodiment may provide a structure capable of transmitting a force by the interaction generated between the magnet and the electromagnet to the door through the rack gear coupled to the magnet.

According to an embodiment, the base may include a guide rail (e.g., the guide rail 113 of FIG. 1A, FIG 1B, and FIG 1C) guiding movement of the rack rear with respect to the base.

The case according to an embodiment may provide a structure capable of preventing a separation of the rack gear by the guide rail guiding the movement of the rack gear.

According to an embodiment, a portion of the rack gear disposed inside the guide rail may be parallel to a surface of the base. According to an embodiment, another portion of the rack gear disposed outside the guide rail may have curvature and be bent.

The case according to an embodiment may provide the structure capable of preventing the size of the case from being excessively increased in order to secure the moving space of the rack gear by means of the deformable rack gear.

A case (e.g., the case 100 of FIG. 1A, FIG. 1B, and FIG. 1C) detachably coupled to an electronic device (e.g., the electronic device 200 of FIG. 2A, FIG. 2B, FIG. 2C, and FIG. 2D) according to an embodiment, may comprise a base (e.g., the base 110 of FIG. 1A, FIG. 1B, and FIG. 1C). According to an embodiment, the case may comprise a door (e.g., the door 120 of FIG. 1A, FIG. 1B, and FIG. 1C), rotatable with respect to the base, changeable to a first state covering a lateral surface (e.g., the lateral surface 200c of FIG. 2A, FIG. 2B, FIG. 2C, and FIG. 2D) of the electronic device and a second state in which the lateral surface of the electronic device is exposed to an outside of the case. According to an embodiment, the case may comprise a shaft (e.g., the shaft 130 of FIG. 1A, FIG. 1B, and FIG. 1C), coupling the door to the base, penetrating the door and the base. According to an embodiment, the case may comprise a pinion gear (e.g., the pinion gear 140 of FIG. 1A, FIG. 1B, and FIG. 1C), coupled to the shaft, rotatable with respect to the base. According to an embodiment, the case may comprise a rack gear (e.g., the rack gear 150 of FIG. 1A, FIG. 1B, and FIG. 1C) engaged with the pinion gear, movable in the base. According to an embodiment, the case may comprise a magnet (e.g., the magnet 160 of FIG. 1A, FIG. 1B, and FIG. 1C) coupled to the rack gear. According to an embodiment, the case may comprise an electromagnet (e.g., the electromagnet 170 of FIG. 1A, FIG. 1B, and FIG. 1C) disposed in the base. According to an embodiment, the case may comprise wireless communication circuitry configured to apply power to the electromagnet based on receiving a signal from the electronic device. According to an embodiment, the wireless communication circuitry may be configured to change a state of the door to the first state by changing a polarity of an end of the electromagnet to be different from a polarity of an end of the magnet. According to an embodiment, the wireless communication circuitry (e.g., the wireless communication circuitry 180 of FIG. 1A, FIG. 1B, and FIG. 1C) may be configured to change the state of the door to the second state by changing the polarity of the end of the electromagnet to be the same as the polarity of the end of the magnet.

Since the state of the door is changed through a user input for changing a state of the electronic device without a separate user input for changing the state of the door, the case according to an embodiment may provide convenience to a user.

According to an embodiment, the rack gear may be deformable within the base 110 according to movement of the magnet.

By the deformable rack gear, a structure capable of preventing a size of the case from excessively increasing in order to secure a moving space of the rack gear may be provided.

According to an embodiment, the base may include a guide rail (e.g., the guide rail 113 of FIG. 1A, FIG. 1B, and FIG. 1C) guiding movement of the rack rear with respect to the base.

The case according to an embodiment may provide a structure capable of preventing separation of the rack gear by the guide rail guiding the movement of the rack gear.

According to an embodiment, the rack gear may be moving in a direction facing away from the electromagnet when the polarity of the end of the electromagnet and the polarity of the end of the magnet are same each other. According to an embodiment, the rack gear may be moving in a direction approaching the electromagnet when the polarity of the end of the electromagnet and the polarity of the end of the magnet are different from each other.

The case according to an embodiment may provide a structure capable of opening or closing the door through an interaction between the magnet and the electromagnet.

According to an embodiment, the magnet may be coupled to an end of the rack gear facing the electromagnet.

The case according to an embodiment may provide a structure capable of transmitting a force by the interaction generated between the magnet and the electromagnet to the door through the rack gear coupled to the magnet.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

## Claims

1. A case (100) detachably coupled to an electronic device (200), the case (100) comprising:
a base (110); and
a door (120), by rotating with respect to the base (110), changeable to a first state facing a lateral surface (200c) of the electronic device (200) and a second state in which the lateral surface (200c) of the electronic device (200) is exposed to an outside of the case (100), and
wherein a state of the door (120) is changed:
from the first state to the second state based on a state of the electronic device (200) changing from a slide-in state in which a display (230) of the electronic device (200) has a first size to a slide-out state in which the display (230) has a second size greater than the first size, and
from the second state to the first state based on the state of the electronic device (200) changing from the slide-out state to the slide-in state.

2. The case (100) of claim 1,
wherein the state of the electronic device (200) is changed as a portion of the electronic device (200) moves with respect to another portion of the electronic device (200), and
wherein the door (120) covers the lateral surface (200c) of the electronic device (200) disposed on the portion of the electronic device (200) in the first state.

3. The case (100) of any one of claims 1 and 2 further comprising:
a shaft (130) coupling the door (120) to the base (110) by penetrating the door (120) and the base (110).

4. The case (100) of any one of claims 1 to 3,
wherein the door (120) is bent and has curvature.

5. The case (100) of any one of claims 1 to 4,
wherein the door (120) is spaced apart from a surface (200a) of the electronic device (200) connected to the lateral surface (200c) of the electronic device (200) in the second state.

6. The case (100) of any one of claims 1 to 5,
wherein the base (110) includes:
a supporting portion (111) facing a rear surface of the electronic device (200) when the electronic device (200) and the case (100) are coupled, and
a partition wall (112) surrounding a periphery of the electronic device (200) when the electronic device (200) and the case (100) are coupled.

7. The case (100) of any one of claims 1 to 6,
wherein the partition wall (112) includes a connector hole penetrating a surface of the partition wall (112).

8. The case (100) of any one of claims 1 to 7,
wherein the supporting portion (111) includes at least one camera hole penetrating a surface of the supporting portion (111).

9. The case (100) of any one of claims 1 to 8, further comprising:
a pinion gear (140), coupled to the door (120), rotatable with respect to the base (110);
a rack gear (150), engaged with the pinion gear (140), rotating the pinion gear (140) by moving within an inside of the base (110);
a magnet (160) coupled to the rack gear (150);
an electromagnet (170) disposed in the base (110); and
wireless communication circuitry (180), electrically connected to the electromagnet (170), configured to receive an electric signal from the electronic device (200), and
wherein the wireless communication circuitry (180) is further configured to:
change a state of the door (120) to the first state by changing a polarity of an end (170a) of the electromagnet (170) to be different from a polarity of an end (160a) of the magnet (160), and
change the state of the door (120) to the second state by changing the polarity of the end (170a) of the electromagnet (170) to be the same as the polarity of the end (160a) of the magnet (160).

10. The case (100) of any one of claims 1 to 9,
wherein the rack gear (150) is deformable by moving with respect to the base (110).

11. The case (100) of any one of claims 1 to 10,
wherein the rack gear (150) is moving:
in a direction facing away from the electromagnet (170) when the polarity of the end (170a) of the electromagnet (170) and the polarity of the end (160a) of the magnet (160) are same each other, and
in a direction approaching the electromagnet (170) when the polarity of the end (170a) of the electromagnet (170) and the polarity of the end (160a) of the magnet (160) are different from each other.

12. The case (100) of any one of claims 1 to 11,
wherein the electromagnet (170) includes:
a core (171); and
a coil (172), surrounding the core (171), configured to apply a magnetic field to the core (171) based on power received from the wireless communication circuitry (180).

13. The case (100) of any one of claims 1 to 12,
wherein the magnet (160) is coupled to an end of the rack gear (150) facing the electromagnet (170).

14. The case (100) of any one of claims 1 to 13,
The base (110) includes a guide rail guiding movement of the rack rear with respect to the base (110).

15. The case (100) of any one of claims 1 to 14,
wherein a portion of the rack gear (150) disposed inside the guide rail is parallel to a surface of the base (110), and
wherein another portion of the rack gear (150) disposed outside the guide rail is bent and has curvature.
